# EUROPÄISCHE PATENTANMELDUNG

(11) **EP 1 046 616 A2**
(43) Veröffentlichungstag der Anmeldung: **25.10.2000**
(21) Anmeldenummer: 00102554.3
(22) Anmeldetag: 07.02.2000
(51) Int. Cl.: C02F 1/46

(54) **Elektrodenanordnung zur galvanischen Behandlung von strömenden Medien**

(30) Priorität: 06.02.1999 DE 19904917; 04.02.2000 DE 10004912
(71) Anmelder: Vallendar, Hubertus, 56829 Pommern/Mosel (DE)
(72) Erfinder:
(74) Vertreter: Thiel, Christian

(57) **Zusammenfassung**

Die vorliegende Erfindung betrifft eine Elektrodenanordnung zur galvanischen Behandlung von strömenden Medien, mit einer zylindrischen Elektrodenkammer (4), die in eine Leitung eingliederbar ist und dabei in axialer Richtung vom Medium durchströmbar ist, und in der koaxial mindestens eine Elektrode (5) angebracht ist, wobei jeweils die Innenwandung der Elektrodenkammer (4) und die Außenwandung der Elektrode (5) die aktiven, umströmbaren elektrolytischen Elektrodenflächen aufweisen. Um eine verbesserte Elektrodenanordnung zur Verfügung zu stellen, die eine verbesserte Feldgeometrie aufweist und bei der die erreichbare relative Ionenkonzentration erhöht wird, schlägt die Erfindung vor, daß die Elektrode (5) kegelförmig ausgebildet ist mit in Strömungsrichtung zunehmendem Durchmesser.

## Beschreibung

Die vorliegende Erfindung betrifft eine Elektrodenanordnung zur galvanischen Behandlung von strömenden Medien, mit einer zylindrischen Elektrodenkammer, die in eine Leitung eingliederbar ist und dabei in axialer Richtung vom Medium durchströmbar ist, und in der koaxial mindestens eine Elektrode angebracht ist, wobei jeweils die Innenwandung der Elektrodenkammer und die Außenwandung der Elektrode die aktiven, umströmbaren Elektrodenflächen aufweisen. Im besonderen dient die Elektrodenanordnung zur Aufbereitung von Wasser in geschlossenen und offenen Leitungssystemen.

Vorrichtungen mit derartigen Elektrodenanordnungen sind grundsätzlich zur Aufbereitung von Flüssigkeiten geeignet. Besondere Bedeutung in diesem Zusammenhang hat dabei die Anwendung in physikalischen Wasserbehandlungsgeräten, die zur Verringerung von Kalksteinbildung in offenen und geschlossenen Leitungssystemen eingesetzt werden. Der Bildung von schädlichen Verkrustungen durch Calciumcarbonat-(Kalk)-Ablagerungen in Rohrleitungen und Armaturen soll durch galvanische, bzw. elektrolytische Behandlung, d.h. die Abgabe von Ionen in die Flüssigkeit, begegnet werden.

Galvanische Flüssigkeitsbehandlungsgeräte funktionieren nach dem Prinzip, daß Elektroden aus Metallen mit unterschiedlichen elektrochemischen Potentialen im Flüssigkeitsstrom angebracht werden. Zwischen den Elektroden wird eine Potentialdifferenz aufgebaut, die zu einem Korrosionsstrom führt. Dieser löst die aus dem unedleren Metall bestehende Opferanode, die häufig aus Zink besteht, auf, d. h. es kommt zur Bildung von Zn⁺-lonen. Durch die im Wasser nunmehr enthaltenen Zinkionen wird die Kristallkeimbildung bzw. das Kristallwachstum des Calciumcarbonats gehemmt. Als weiterer Effekt tritt an der Kathode, welche durch die in der Regel aus Kupfer oder Messing bestehende Wandung der Elektrodenkammer gebildet wird, wegen der dort stattfindenden Sauerstoffreduktion eine erhöhte Alkalität auf, wodurch bereits geringste Mengen von dort vorhandenem Kalk ausfallen. Diese wirken dann ebenfalls als freie Kristallisationszentren und verhindern damit weitere Ablagerungen.

Eine derartige Vorrichtung zur Behandlung von Flüssigkeiten ist beispielsweise in der EP 0 467 505 B1 beschrieben. Die Elektrodenkammer wird dabei durch eine rohrförmige, äußere Elektrode begrenzt, die durch die Rohrwandung des durchströmten Rohrs selbst oder einen darin koaxial angeordneten Rohrabschnitt gebildet wird. Innerhalb der zylindrischen Elektrodenkammer ist zentral, d. h. koaxial sich in Strömungsrichtung erstreckend, eine zylindrischstabförmige Elektrode angebracht.

Bei einer weiteren, nach dem Stand der Technik bekannten Ausführungsform gemäß der EP 0 680 457 B1 wird die Elektrodenkammer ebenfalls durch einen beidseitig mit Anschlußarmaturen versehenen Rohrleitungs-Abschnitt gebildet. Die als Opferanode dienende Zink-Elektrode ist darin ebenfalls koaxial angeordnet, und zwar in Form eines an der Innenwand der Elektrodenkammer anliegenden Rohrabschnitts, der seinerseits vom fluiden Medium durchströmbar ist.

Die nach dem Stand der Technik vorbekannten Geräte führen in vorteilhafter Weise zu einer meßbaren Verringerung der Kalkablagerungen, insbesondere in Leitungsnetzen, die mit relativ hartem Brauch-, Prozeß- oder Trinkwasser gespeist werden. Ein Nachteil im vorbekannten Stand der Technik ist jedoch, daß, bedingt durch die Elektrodengeometrie, entweder ein stark unregelmäßiger Potentialverlauf mit gekrümmten Feldlinien vorliegt, wie bei der letztgenannten Ausführungsform. Bei der erstgenannten Ausführungsform ist zwar wegen der koaxialen Anordnung die Feldstärke zwischen den Elektroden über die Länge der Elektrodenkammer im wesentlichen gleichbleibend. Bedingt durch die in Strömungsrichtung durch die Elektrodenkammer zunehmende Ionenkonzentration findet jedoch auch dabei eine räumlich unregelmäßige Korrosion der Opferanode statt. Dies hat zur Folge, daß diese wegen lokaler Korrosion ersetzt werden muß, auch wenn in weniger stark beanspruchten Bereichen grundsätzlich noch Opfermaterial vorhanden wäre. Wegen der kurzen Verweilzeit beim Flüssigkeitskontakt mit der aktiven Elektrodenfläche bleibt die relative lonenkonzentration begrenzt.

Aus der EP 0 498 098 B1 ist weiterhin eine kapazitive Wasserbehandlungsvorrichtung bekannt, bei der die Elektroden als konzentrische Rohrabschnitte ausgebildet sind. Abgesehen davon, daß die Elektroden darin zumindest teilweise mit einer isolierenden Schicht überzogen sind und damit keine lonenabgabe an das Wasser erfolgen kann, steigt das Potential in axialer Richtung ebenfalls sprunghaft an. Eine ähnliche Vorrichtung geht aus der EP 0 580 275 B1 hervor. Darin sind die Elektroden jedoch als an der Elektrodenkammer - Innenwandung anliegende Rohrabschnitte ausgebildet.

Die EP 0 499 732 B1 zeigt ebenfalls eine konzentrische Elektrodenanordnung. Diese weißt eine zentrale Elektrode aus Kohlenstoff aus, die als zylindrische Stange ausgebildet ist. Die lonenabgabe erfolgt bei dieser Anordnung nicht über die zentrale Elektrode, sondern über eine dritte Elektrode, die aus Eisen besteht.

Aus der EP 0 661 237 B 1 geht eine Wasserbehandlungsvorrichtung hervor, bei der die Elektroden nicht mit dem Flüssigkeitsstrom unmittelbar in Kontakt stehen. Insofern handelt es sich auch dabei um eine Elektrodenanordnung zur kapazitiven Behandlung des durchströmenden Mediums.

Angesichts dieser Problematik liegt der Erfindung die Aufgabe zugrunde, eine Elektrodenanordnung zur Verfügung zu stellen, welche eine verbesserte Feldgeometrie aufweist und bei der die erreichbare relative lonenkonzentration erhöht wird.

Zur Lösung dieses Problems schlägt die Erfindung eine Elektrodenanordnung vor, bei der die Elektrode kegelförmig ausgebildet ist mit in Strömungsrichtung zunehmendem Durchmesser.

Bei der erfindungsgemäßen Elektrodenanordnung ist die zentral innerhalb des Durchströmquerschnitts liegende Elektrode konisch ausgebildet, und zwar bevorzugt über ihre gesamte axiale Länge. Das verjüngte Ende des konischen Bereichs liegt dabei auf der Eingangsseite der Elektrodenkammer. Das bedeutet, daß der Kegel in axialer Richtung von der Spitze her angeströmt wird.

Ein besonderer Vorteil der erfindungsgemäßen Elektrodengeometrie liegt in der damit realisierten Feldgeometrie, welche durch den Potentialverlauf zwischen der äußeren Mantelfläche der konischen Elektrode und der zylindrischen Innenfläche der rohrförmigen Elektrodenkammer vorgegeben wird. Der lineare Anstieg des Elektrodendurchmessers in Strömungsrichtung entspricht dabei einer ebenfalls linearen Verringerung des radialen Abstands zur Wandung der Elektrodenkammer. Bei gleichbleibender Potentialdifferenz nimmt folglich die Feldstärke ebenfalls in Strömungsrichtung linear zu. Dadurch wird erreicht, daß die lonenkonzentration in der einströmenden Flüssigkeit aufgrund des gleichmäßigen Potentialaufbaus in Strömungsrichtung ebenfalls gleichmäßig bis zum erreichbaren Maximalwert erhöht wird. Das radiale Konzentrationsgefälle der im durchströmenden Wasser gelösten Zinkionen ist jedenfalls deutlich geringer als bei unstetig ansteigenden oder unregelmäßig geformten Feldgeometrien.

Ein weiterer Vorteil ist, daß am eingangsseitigen Ende der konischen Elektrode wegen der dort herrschenden geringeren lokalen Feldstärke weniger lonen abgegeben werden, so daß die Elektrokorrosion am dünneren Ende der Elektrode geringer ist. Entsprechend führt der Anstieg der Feldstärke dazu, daß im Bereich des größeren Elektrodendurchmessers am ausgangsseitigen Elektrodenende die lonen-Abgaberate höher ist, was mit einer stärkeren Elektrokorrosion in diesem Bereich einhergeht. Daraus resultiert eine besonders gleichmäßige Abnutzung der Elektrode unter optimierter Ausnutzung des eingesetzten Elektrodenmaterials. Der Wartungsaufwand wird dadurch verringert, daß ein Austausch einer abgenutzten Elektrode seltener erforderlich wird.

Vorzugsweise wird die erfindungsgemäße Elektrodenanordnung bei einer Wasserbehandlungsvorrichtung eingesetzt, bei der die Elektrode aus zinkhaltigem Metall, bevorzugt aus reinem Zink, und die Elektrodenkammer aus kupferhaltigem Metall, beispielsweise Messing, Bronze oder Rotguß, besteht. Alternativ kann die Elektrode als Opferanode aus einem anderen, im Vergleich mit der Elektrodenkammer unedleren Material bestehen.

Bei einer besonders vorteilhaften Elektrodenanordnung sind eingangsseitig in der Elektrodenkammer Strömungsleitmittel angeordnet zur Erzeugung einer helikalen Drallströmung um die Elektrode.

Das besondere bei dieser Erfindung ist, daß die axial in die Elektrodenkammer einfließende Flüssigkeit die zentrale Elektrode nicht lediglich axial anströmt, sondern durch die Strömungsleitmittel in der Elektrodenkammer ein koaxiales Wirbelströmungsfeld erzeugt wird. Das bedeutet, daß die Flüssigkeit schraubenlinienförmig um die Elektrode herumgeführt wird. Der effektive Fließweg und damit die Verweildauer im potentialgefüllten Raum zwischen der Elektrode und der Wandung der Elektrodenkammer wird damit vervielfacht. Die Abgabe von lonen der Elektrode, d. h. der Opferanode, sowie die homogene Verteilung in der Flüssigkeit wird dadurch verbessert.

Durch das erfindungsgemäße Drallströmungsfeld wird im Bezugssystem der strömenden Flüssigkeit eine verbesserte Feldgeometrie realisiert. Die erreichbare relative lonenkonzentration wird dadurch gesteigert, daß die Verweildauer im Feld erhöht wird und zugleich ein besonders inniger Kontakt der Flüssigkeit mit der Elektrodenoberfläche vorliegt.

Sowohl die erstgenannte Ausführung der Erfindung mit der konischen Ausführungen der Elektrode, als auch die vorgenannte Ausführung mit den Strömungsleitmitteln zur Erzeugung einer konzentrischen Drallströmung bringen jeweils für sich genommen bereits eine deutliche Verbesserung im Hinblick auf die eingangs gestellte, der Erfindung zugrundeliegende Aufgabe. Besonders vorteilhaft ist überdies eine Kombination dieser beiden erfindungsgemäßen Maßnahmen, die ihre vorteilhaften Wirkungen dann gegenseitig nochmals verstärken.

Die Strömungsleitmittel zur Erzeugung der Drallströmung können mindestens eine in Umfangrichtung gegen die Längsachse geneigte, auf die Elektrode gerichtete Eintrittsdüse und/oder auf der konischen Mantelfläche der Elektrode angeordnete Strömungsleitflächen aufweisen. Diese Maßnahmen können alternativ oder kombiniert vorgesehen werden. Die an erster Stelle genannten Eintrittsdüsen sind so gegen die Längsachse der Elektrodenkammer geneigt, daß sie der eintretenden Flüssigkeit neben der axialen auch eine tangentiale Strömungskomponente geben. Zur Unterstützung der um die Elektrode gewundenen Drallströmung können weiterhin auf deren Oberfläche durchgehende oder segmentierte, auf Schraubenlinien angeordnete Strömungsleitflächen vorgesehen sein.

Zur Erhöhung der Wartungsfreundlichkeit einer galvanischen Vorrichtung zur Behandlung von Flüssigkeiten, insbesondere von Wasser, ist es besonders vorteilhaft, daß die im Laufe der Zeit abgenutzte Opferelektrode schnell und ohne großen Montageaufwand austauschbar ist. Der hierzu erforderliche Zugang zum Inneren der Elektrodenkammer läßt sich gut dadurch erreichen, daß die Elektrodenkammer durch den Innenraum eines Rohrgehäuses gebildet wird, an dem stirnseitig Anschlußstücke lösbar angebracht sind. Diese können beispielsweise als Gewindestücke oder -muffen ausgebildet sein, die an dem Rohrgehäuse anflanschbar oder in dieses einschraubbar sind.

Die Befestigung der Elektrode erfolgt vorzugsweise an Elektrodenhalterungen, die in der Elektrodenkammer angebracht sind, und in welche die Elektrode in axialer Richtung lösbar einsetzbar ist. Eine solche besonders einfache und sichere Steckverbindung läßt sich dadurch realisieren, daß die Elektrode zentral angeordnete Haltezapfen oder Haltebohrungen aufweist, die mit entsprechenden Aufnahmebohrungen bzw. -zapfen an den Elektrodenhalterungen korrespondieren.

Um den Flüssigkeitsstrom nach dem Passieren der Elektrodenkammer wieder zu beruhigen, d. h. zu vergleichmäßigen, werden am Ausgang der Elektrodenkammer zweckmäßigerweise Strömungsberuhigungsmittel mit in axialer Richtung durchgehenden Strömungsleitkanälen installiert. Diese sorgen für eine Abbremsung der Drallströmung und eine Vergleichmäßigung des Durchflusses im anschließenden Leitungssystem.

Die Elektrodenhalterungen können vorteilhafterweise mit den Strömungsberuhigungsmitteln in einem Bauteil kombiniert werden. Bevorzugt besteht dieses Bauteil aus leitendem Material, beispielsweise einem Metall wie Messing oder Rotguß. Mit diesem wird die Elektrode ebenfalls leitend verbunden.

Vorteilhafterweise ist im Strömungsquerschnitt, beispielsweise am Eingang der Elektrodenkammer, eine Silberelektrode angebracht. Die dadurch in die Flüssigkeit übergehenden Silberionen unterbinden zuverlässig Keimbildung und insbesondere Algenbewuchs. Mit einer Kupferelektrode ist eine ähnliche Wirkung erreichbar. Dabei hat sich herausgestellt, daß ein besonders effektiver Algenschutz durch Kombination einer Silber- und einer Kupferelektrode erreicht wird.

Die vorgenannten Silber- bzw. Kupferelektroden werden beispielsweise als Ringelektroden ausgebildet, die mittels Kunststoff-Fixierelementen, beispielsweise aus Teflon, am Eingang der Elektrodenkammer angebracht werden.

Ein Ausführungsbeispiel einer Vorrichtung zur Behandlung von Flüssigkeiten mit einer erfindungsgemäßen Elektrodenanordnung ist im folgenden anhand der Zeichnungen näher erläutert:

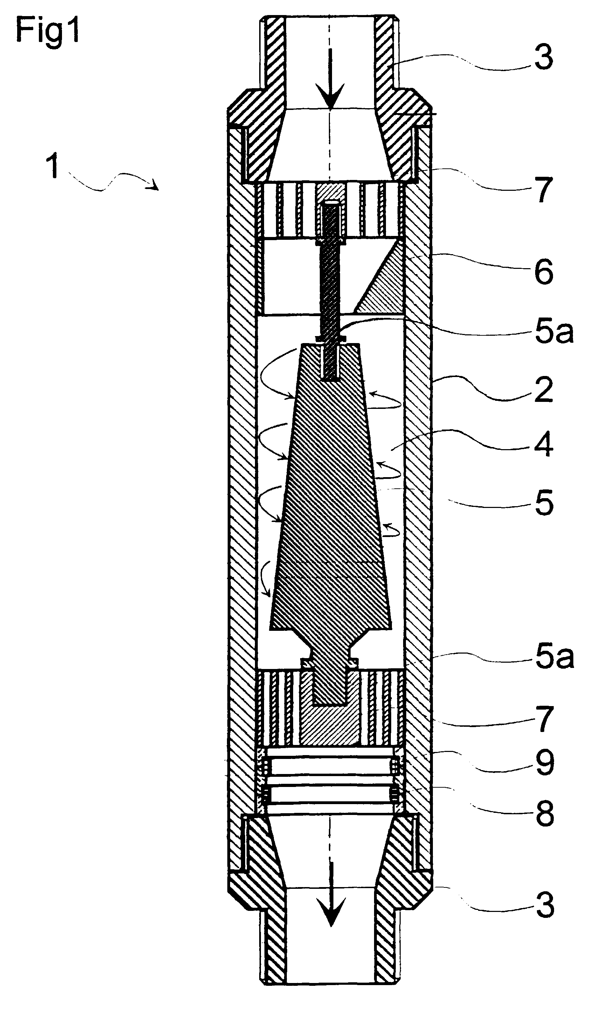

Hierzu zeigt Fig. 1 einen Längsschnitt durch eine erfindungsgemäß ausgestaltete Wasserbehandlungsvorrichtung, die als Ganzes mit dem Bezugszeichen 1 versehen ist.

Die Wasserbehandlungsvorrichtung 1 weist ein vorzugsweise aus Messing bestehendes Rohrgehäuse 2 auf, in welches stirnseitig Gewinde-Anschlußarmaturen 3 eingeschraubt sind. Diese sind an ein nicht dargestelltes Leitungsnetz anschließbar, wobei die Strömungsrichtung des durchfließenden Wassers mit den Pfeilen angedeutet ist.

Das Rohrgehäuse 2 bildet im mittleren Bereich eine Elektrodenkammer 4, wobei die Innenwandung des Rohrgehäuses 2 die aktive Elektrodenfläche darstellt.

Koaxial innerhalb dieser Elektrodenkammer 4 ist eine erfindungsgemäß kegelförmige Elektrode 5 angebracht. Diese ist hier als aus Zink bestehende Opferanode ausgebildet. Aus dieser Darstellung geht besonders deutlich die erfindungsgemäße Ausgestaltung mit dem sich in Strömungsrichtung aufweitenden Kegeldurchmesser der Elektrode 5 hervor.

Eingangsseitig vor der Elektrode 5 ist als Strömungsleitmittel ein Richtungsströmer 6 mit einer geneigt-tangentialen Düsenanordnung angebracht. Dadurch wird der in Pfeilrichtung einfließenden Flüssigkeit eine Drallströmung aufgeprägt, die in Strömungsrichtung schraubenlinienförmig um die Elektrode 5 gewunden ist.

Die Halterung der Elektrode 5 erfolgt in Elektrodenhalterungen 7, die gleichzeitig als Strömungsberuhigungsmittel mit in axialer Richtung durchgehenden Strömungsleitkanälen ausgebildet sind. Die Verbindungen von Elektrode 5 und Elektrodenhalterungen 7 sind als Steckverbindungen mit Haltezapfen 5a und korrespondierenden Aufnahmebohrungen ausgebildet.

Bei der dargestellten Ausführungsform sind im Anschluß an die Elektrodenkammer 4 im Strömungsquerschnitt eine Silberelektrode 8 und eine Kupferelektrode 9 angeordnet. Diese sind in Teflonmuffen isoliert im Rohrgehäuse 2 angebracht.

Die vorteilhafte Funktion der Erfindung beruht im wesentlichen darauf, daß durch die konische Form der Elektrode 5 sich der Elektrodenabstand zur Innenwandung der zylindrischen Elektrodenkammer 4 in axialer Richtung verringert und damit ein linear ansteigender Potentialaufbau erfolgt. Damit erreicht man eine besonders gleichmäßige Aufkonzentration der von der Elektrode 5 abgegebenen Zinkionen an das Wasser.

Durch den Richtungsströmer 6 erhält das in die Elektrodenkammer einströmende Wasser eine um die Elektrode 5 gewundene Drallströmung, was mit den gebogenen Pfeilen angedeutet ist. Dadurch ergibt sich ein besonders inniger Kontakt mit der Elektrodenoberfläche sowie eine längere Verweildauer, wodurch die Ionenaufnahme des Wassers verbessert wird.

Über die Steckzapfen 5a kann die Elektrode 5 besonders einfach in die Elektrodenhalterung 7 eingesetzt werden, nachdem eine der Anschlußarmaturen 3 von dem Rohrgehäuse 2 abgeschraubt worden ist. Der Austausch zu Wartungszwecken ist damit problemlos möglich.

Die Silberelektrode 8 sorgt zusammen mit der Kupferelektrode 9 für eine besonders effektive Unterdrückung von unerwünschtem Algenwachstum im sich an die Vorrichtung anschließenden Rohrleitungsnetz.

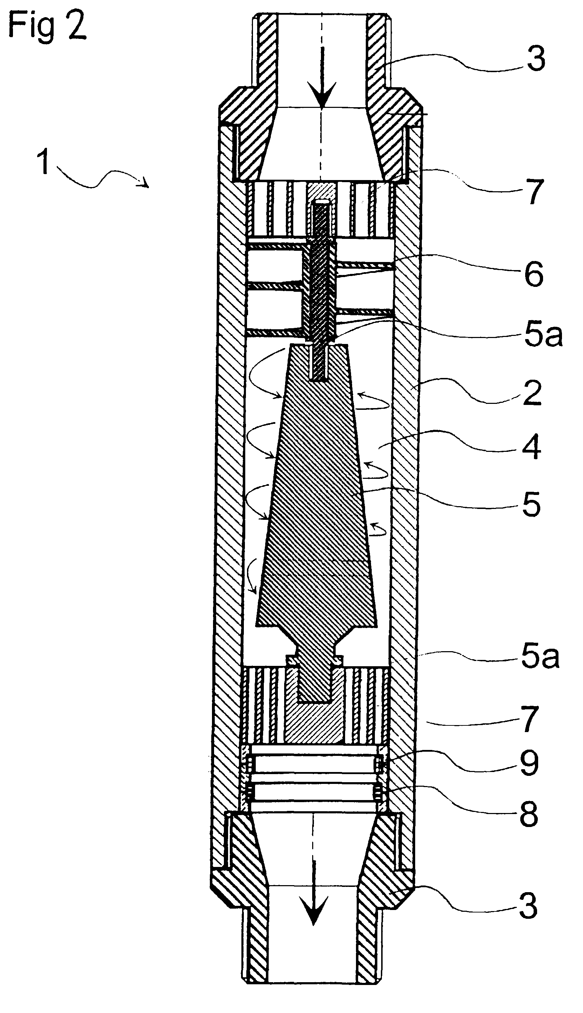

Fig. 2 zeigt eine Variante der erfindungsgemäßen Anordnung, bei der der Richtungsströmer 6 als Wendel bzw. Spirale ausgebildet ist, die ebenfalls zu einem schraubenlinienförmigen Strömungsverlauf auf die Elektrode 5 hin sorgt.

## Patentansprüche

1. Elektrodenanordnung zur galvanischen Behandlung von strömenden Medien, mit einer zylindrischen Elektrodenkammer, die in eine Leitung eingliederbar ist und dabei in axialer Richtung vom Medium durchströmbar ist, und in der koaxial mindestens eine Elektrode angebracht ist, wobei jeweils die Innenwandung der Elektrodenkammer und die Außenwandung der Elektrode die aktiven, umströmbaren Elektrodenflächen aufweisen,
**dadurch gekennzeichnet,**
daß die Elektrode (5) kegelförmig ausgebildet ist mit in Strömungsrichtung zunehmendem Durchmesser.

2. Elektrodenanordnung nach Anspruch 1, dadurch gekennzeichnet, daß die Elektrode (5) als Opferanode ausgebildet ist.

3. Elektrodenanordnung nach Anspruch 1, dadurch gekennzeichnet, daß die Elektrode (5) aus zinkhaltigem Metall besteht.

4. Elektrodenanordnung nach Anspruch 1, dadurch gekennzeichnet, daß die Wandung der Elektrodenkammer (4) aus kupferhaltigem Metall besteht.

5. Elektrodenanordnung, insbesondere nach Anspruch 1, dadurch gekennzeichnet, daß eingangsseitig in der Elektrodenkammer (4) Strömungsleitmittel (6) angeordnet sind zur Erzeugung einer helikalen Drallströmung um die Elektrode (5).

6. Elektrodenanordnung nach Anspruch 5, dadurch gekennzeichnet, daß die Strömungsleitmittel (6) mindestens eine in Umfangsrichtung gegen die Längsachse geneigte, auf die Elektrode (5) gerichtete Eintrittsdüse aufweisen.

7. Elektrodenanordnung nach Anspruch 5, dadurch gekennzeichnet, daß die Strömungsleitmittel (6) auf der konischen Mantelfläche der Elektrode (5) angeordnete Strömungsleitflächen aufweisen.

8. Elektrodenanordnung nach Anspruch 1 oder 5, dadurch gekennzeichnet, daß die Elektrodenkammer (4) durch den Innenraum eines Rohrgehäuses (2) gebildet wird, an dem stirnseitig Anschlußstücke (3) lösbar angebracht sind.

9. Elektrodenanordnung nach Anspruch 8, dadurch gekennzeichnet, daß die Anschlußstücke (3) in das Rohrgehäuse (2) einschraubbar sind.

10. Elektrodenanordnung nach Anspruch 1 oder 5, dadurch gekennzeichnet, daß in der Elektrodenkammer (4) Elektrodenhalterungen (7) angebracht sind, in welche die Elektrode (5) in axialer Richtung lösbar einsetzbar ist.

11. Elektrodenanordnung nach Anspruch 1 oder 5, dadurch gekennzeichnet, daß die Elektrode (5) zentrale, axial vorstehende Haltezapfen (5a) aufweist.

12. Elektrodenanordnung nach Anspruch 1 oder 5, dadurch gekennzeichnet, daß die Elektrode (5) zentrale Haltebohrungen aufweist.

13. Elektrodenanordnung nach Anspruch 10, dadurch gekennzeichnet, daß die Elektrodenhalterungen (7) aus leitendem Material bestehen und mit der Elektrode (5) und der Elektrodenkammer (4) leitend verbunden sind.

14. Elektrodenanordnung nach Anspruch 1 oder 5, dadurch gekennzeichnet, daß am Ausgang der Elektrodenkammer (4) Strömungsberuhigungsmittel (7) mit in axialer Richtung durchgehenden Strömungsleitkanälen installiert sind.

15. Elektrodenanordnung nach Anspruch 1 oder 5, dadurch gekennzeichnet, daß mindestens eine Silberelektrode (8) im Strömungsquerschnitt angebracht ist.

16. Elektrodenanordnung nach Anspruch 1 oder 5, dadurch gekennzeichnet, daß mindestens eine Kupferelektrode (9) im Strömungsquerschnitt angeordnet ist.

17. Elektrodenanordnung nach Anspruch 15 oder 16, dadurch gekennzeichnet, daß die Elektroden (8,9) als Ringelektroden ausgebildet sind.
